# EUROPEAN PATENT APPLICATION

(11) **EP 4 741 462 A1**
(43) Date of publication of application: **13.05.2026**
(21) Application number: 24836025.7
(22) Date of filing: 02.07.2024
(51) Int. Cl.: C08L 101/00, C08K 5/12, C08K 5/1535, C08L 27/04, C09K 3/00

(54) **PLASTICIZER COMPOSITION**

(30) Priority: 05.07.2023 JP 2023110579
(71) Applicant: Kao Corporation, Tokyo 103-8210 (JP)
(72) Inventor: OSHIRO, Kojun, Tokyo 103-8210 (JP)
(74) Representative: Hoffmann Eitle
(86) International application number: PCT/JP2024/023852
(87) International publication number: WO 2025/009512

(57) **Abstract**

The present invention relates to a plasticizer composition including a plasticizer A composed of a phthalic acid diester represented by a general formula (I); and a plasticizer B containing an isosorbide diester (b1) represented by a general formula (II): 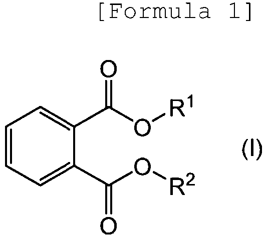 in the general formula (I), R¹ and R² are each a linear or branched alkyl group having 8 or more and 14 or less carbon atoms, and be the same or different, 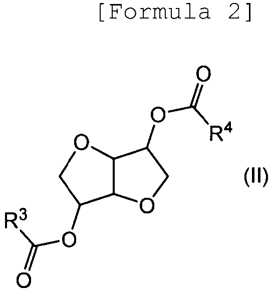 in the general formula (II), R³ and R⁴ are each a linear or branched alkyl group having different carbon numbers.

## Description

### TECHNICAL FIELD

The present invention relates to plasticizer composition, and a halogen-based resin composition containing thereof and a method for producing a plasticizer composition.

### BACKGROUND ART

Halogen-based resins such as vinyl chloride resin (PVC) are important resins used in various fields as general-purpose polymers. For example, PVC is used for various applications such as house interior items such as wall paper; general-purpose products such as toys; and automobile related materials such as sealing materials.

When a halogen-based resin is used, for example, a plasticizer, a diluent, a viscosity-decreasing agent, a filler such as calcium carbonate, a pigment, a flame retardant, a foaming agent, a stabilizer, and the like are blended in a halogen-based resin powder to prepare a halogen-based resin composition.

However, the plasticizer blended for improving the processability of the halogen-based resin composition has a problem of heat resistance in which the plasticizer volatilizes from the surface of the halogen-based resin composition when exposed to a high temperature, and cracks and the like occur due to curing of the halogen-based resin composition.

JP-A-2015-516009 (Patent Document 1) discloses a composition containing: based on a total weight of (A) and (B), 0.1 wt% to 99 wt% of at least one 1,4:3,6-dianhydrohexitol ester (A) having a molar mass in a range of 255 to 345 g.mol⁻¹, the ester (A) being selected from monoesters and diesters of isosorbide, isomannide and isoidide; and 1% to 99.9 wt% of at least one compound (B) having a molar mass of more than 345 g.mol⁻¹, the compound (B) being selected from a 1,4:3,6-dianhydrohexitol ester selected from monoesters and diesters of isosorbide, isomannide and isoidide; a 1,4:3,6-dianhydrohexitol ester group containing 1 to 24 carbon atoms, preferably a group containing 6 to 12 carbon atoms; an ester of cyclohexane polycarboxylic acid; an ester of phthalic acid; and a glycerol ester.

### SUMMARY OF THE INVENTION

The present invention relates to a plasticizer composition containing:
a plasticizer A composed of a phthalic acid diester represented by a general formula (I); and a plasticizer B containing an isosorbide diester (b1) represented by a general formula (II). 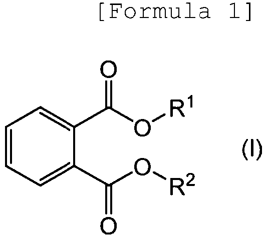 in the general formula (I), R¹ and R² are each a linear or branched alkyl group having 8 or more and 14 or less carbon atoms, and be the same or different. 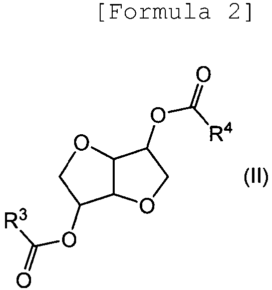 in the general formula (II), R³ and R⁴ are each a linear or branched alkyl group having different carbon numbers.

The composition described in Patent Document 1 has a high plasticization rate, but still has a problem in heat resistance.

The present invention relates to a plasticizer composition which is used in a halogen-based resin composition to give a halogen-based resin composition having excellent heat resistance.

The present inventors have found that a plasticizer composition containing a plasticizer A composed of a phthalic acid diester having a structure derived from an alcohol having a specific chain length and a plasticizer B containing an isosorbide diester having a structure derived from a carboxylic acid having a specific chain length can solve the above problems.

According to the present invention, it is possible to provide a plasticizer composition which is used in a halogen-based resin composition to give a halogen-based resin composition having excellent heat resistance.

### [Plasticizer composition]

The plasticizer composition of the present invention is a plasticizer composition containing a plasticizer A composed of a phthalic acid diester having a structure derived from at least one alcohol selected from linear or branched aliphatic alcohols having a specific carbon number, and a plasticizer B containing an isosorbide diester having structures derived from linear or branched aliphatic carboxylic acids having different carbon numbers.

The plasticizer composition of the present invention exerts an excellent effect on the heat resistance of the halogen-based resin composition. The reason why such an effect is exhibited is not clear, but it is considered as follows.

The plasticizer composition of the present invention contains a plasticizer A composed of a phthalic acid diester having a structure derived from at least one alcohol selected from linear or branched aliphatic alcohols having 8 to 14 carbon atoms, and a plasticizer B containing an isosorbide diester having structures derived from linear or branched aliphatic carboxylic acids having two different carbon numbers. It is considered that when the plasticizer A is composed of a phthalic acid diester having a structure derived from at least one alcohol selected from linear or branched aliphatic alcohols having 8 to 14 carbon atoms, and the plasticizer B contains an isosorbide diester having structures derived from linear or branched aliphatic carboxylic acids having two different carbon numbers, a stronger interaction occurs between the phthalic acid diester and the isosorbide diester than an interaction between the phthalic acid diester and an isosorbide diester having structures derived from the same two carboxylic acids.

Therefore, it is considered that the phthalic acid diester is uniformly diffused into the halogen-based resin composition together with the isosorbide diester, to suppress bleeding of the plasticizer composition of the present invention from the halogen-based resin composition, and to further suppress volatilization of the plasticizer composition of the present invention from the halogen-based resin composition, whereby the halogen-based resin composition has high heat resistance.

### [Plasticizer A]

In the present invention, a plasticizer A is composed of a phthalic acid diester represented by a general formula (I).

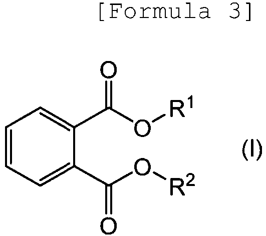

In the general formula (I), R¹ and R² are each a linear or branched alkyl group having 8 or more and 14 or less carbon atoms, and be the same or different.

The linear alkyl group having 8 or more and 14 or less carbon atoms as R¹ and R² is n-octyl group, n-nonyl group, n-decyl group, n-undecyl group, n-dodecyl group, n-tridecyl group, or n-tetradecyl group. Examples of the branched alkyl group having 8 or more and 14 or less carbon atoms as R¹ and R² include 2-ethylhexyl group, 2-butyloctyl group, isooctyl group, isononyl group, isodecyl group, isoundecyl group, isododecyl group, isotridecyl group, and isotetradecyl group. Here, the prefix "iso-" refers to a structure in which a methyl group is branched at a terminal of an alkyl group.

Among them, R¹ and R² are preferably groups selected from linear or branched alkyl groups having 10 or more and 13 or less carbon atoms, and more preferably groups selected from n-decyl group, n-dodecyl group, and isotridecyl group, from the viewpoint that the halogen-based resin composition exhibits excellent heat resistance.

The phthalic acid diester represented by the general formula (I) constituting the plasticizer A may be one kind or two or more kinds. Preferably, the phthalic acid diester represented by the general formula (I) constituting the plasticizer A is one kind or two kinds.

### (Method for producing plasticizer A)

The plasticizer A is obtained by esterifying a phthalic acid raw material and an alcohol raw material containing a linear or branched aliphatic alcohol having 8 or more and 14 or less carbon atoms.

Examples of the phthalic acid raw material include phthalic acid, phthalic anhydride, and phthalic acid esters such as dimethyl phthalate, and from the viewpoint of availability and productivity, one or more selected from phthalic acid and phthalic anhydride are preferable, and phthalic anhydride is more preferable.

Examples of the alcohol raw material include linear aliphatic alcohols having 8 or more and 14 or less carbon atoms, such as 1-octanol, 1-nonanol, 1-decanol, 1-undecanol, 1-dodecanol, 1-tridecanol, and 1-tetradecanol; and branched aliphatic alcohols having 8 or more and 14 or less carbon atoms, such as 2-ethylhexanol, 2-butyloctanol, isooctanol, isononanol, isodecanol, isoundecanol, isododecanol, isotridecanol, and isotetradecanol.

The molar ratio of the linear aliphatic alcohol to the branched aliphatic alcohol in the alcohol raw material (linear aliphatic alcohol/branched aliphatic alcohol) is preferably 70/30 or more, more preferably 80/20 or more, still more preferably 85/15 or more, and is preferably 100/0 or less, more preferably 100/0 from the viewpoint that the halogen-based resin composition exhibits excellent heat resistance. The molar ratio of the linear aliphatic alcohol to the branched aliphatic alcohol in the alcohol raw material (linear aliphatic alcohol/branched aliphatic alcohol) is preferably 70/30 or more and 100/0 or less, more preferably 80/20 or more and 100/0 or less, still more preferably 85/15 or more and 100/0 or less, and still more preferably 100/0.

The amount of the alcohol raw material charged at the time of starting the esterification reaction is preferably more than the stoichiometric amount. The stoichiometric amount of the alcohol raw material in the esterification reaction is a theoretical ratio at which the phthalic acid diester is produced, and is twice the molar amount of the phthalic acid raw material to be used.

That is, the amount of the alcohol raw material charged is preferably 2.0 times mole or more, more preferably 2.1 times mole or more, still more preferably 2.2 times mole or more, and preferably 3.0 times mole or less, more preferably 2.7 times mole or less, still more preferably 2.5 times mole or less based on 1 mole of the phthalic acid raw material from the viewpoint of accelerating the reaction and completing the reaction. The amount of the alcohol raw material charged is preferably 2.0 times mole or more and 3.0 times mole or less, more preferably 2.1 times mole or more and 2.7 times mole or less, and still more preferably 2.2 times mole or more and 2.5 times mole or less based on 1 mole of the phthalic acid raw material.

The alcohol raw material to be used preferably has the moisture content reduced as much as possible. When a large amount of moisture is contained in the alcohol raw material, catalyst poisoning to be described later occurs, and the catalytic ability may deteriorate.

As the esterification reaction catalyst, a known esterification catalyst having an esterification ability can be used, but an organometallic catalyst is preferable.

Examples of the organometallic catalyst include one or more selected from organotin compounds such as tin tetraethylate, butyltin malate, dimethyltin oxide, monobutyltin oxide, dibutyltin oxide, and dioctyltin oxide, organotitanium compounds such as titanium tetraisopropoxide, and organozinc compounds such as zinc acetate. Among them, from the viewpoint of productivity, an organotitanium compound is preferable, and one or more selected from titanium tetraisopropoxide, titanium tetra-n-butoxide, and titanium tetra-2-ethylhexyl oxide are preferable.

The amount of the catalyst used varies depending on the kind thereof, but is preferably 0.01 parts by mass or more, more preferably 0.015 parts by mass or more, and still more preferably 0.02 parts by mass or more based on 100 parts by mass of the total amount of the phthalic acid raw material and the alcohol raw material supplied to the reactor from the viewpoint of sufficiently exerting the catalytic ability. The amount of the catalyst used is preferably 2 parts by mass or less, more preferably 1 part by mass or less, and still more preferably 0.5 parts by mass or less from the viewpoint of catalyst addition efficiency. The amount of the catalyst used is preferably 0.01 parts by mass or more and 2 parts by mass or less, more preferably 0.015 parts by mass or more and 1 part by mass or less, and still more preferably 0.02 parts by mass or more and 0.5 parts by mass or less based on 100 parts by mass of the total amount of the phthalic acid raw material and the alcohol raw material.

The esterification reaction can be performed under reflux of an alcohol using a known reactor equipped with a facility capable of refluxing an alcohol raw material.

The reaction temperature varies depending on the kind of alcohol raw material and the like, but is preferably 100°C or higher, more preferably 130°C or higher, and still more preferably 150°C or higher from the viewpoint of reactivity, and is preferably 280°C or lower, more preferably 260°C or lower, and still more preferably 240°C or lower from the viewpoint of yield. The reaction temperature is preferably 100°C or higher and 280°C or lower, more preferably 130°C or higher and 260°C or lower, and still more preferably 150°C or higher and 240°C or lower. When the reaction temperature is 100°C or higher, the reaction proceeds quickly, and when the reaction temperature is 280°C or lower, generation of a reaction by-product can be suppressed.

The reaction pressure is usually 13.3 kPa or more in absolute pressure, and is preferably normal pressure or less. The reaction pressure can be set by the vapor pressure of the alcohol raw material to be used. Specifically, it is preferable to adjust the pressure to a pressure at which the reaction mixture maintains a boiling state, and it is preferable to adjust the pressure to a pressure at which by-produced water can be removed to the outside of the system.

The reaction time varies depending on the phthalic acid raw material to be used, the alcohol raw material to be used, the reaction temperature, the amount of the catalyst used, and the like, but is preferably 1 hour or more, and more preferably 2 hours or more from the viewpoint of reactivity. When the reaction time is sufficient, the load in the separation step of the unreacted phthalic acid raw material and the phthalic acid monoester as a reaction intermediate is reduced. Meanwhile, the reaction time is preferably 24 hours or less, and more preferably 10 hours or less from the viewpoint of yield. When the reaction time is short, generation of by-products can be suppressed, and the quality of the plasticizer A can be improved.

In the esterification reaction, under the above reaction conditions, the generated water is removed from the reaction system by azeotropy with the alcohol raw material to improve the reaction rate to nearly 100%. The excessive alcohol raw material is separated, and then post-treatment is performed by a known method such as alkali washing, water washing, adsorption of impurities, distillation, or the like, whereby the plasticizer A can be obtained as the phthalic acid diester represented by the general formula (I).

### [Plasticizer B]

In the present invention, the plasticizer B contains an isosorbide diester (b1) represented by the general formula (II). The isosorbide diester (b1) represented by the general formula (II) can have all stereoisomers, and preferably has a steric structure derived from D-sorbitol from the viewpoint of cost.

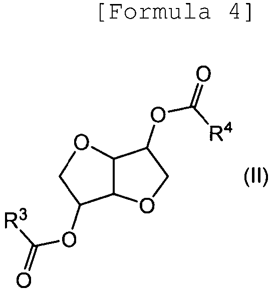

In the general formula (II), wherein R³ and R⁴ are each a linear or branched alkyl group having different carbon numbers.

The linear or branched alkyl group as R³ and R⁴ may be a linear or branched alkyl group in which R³ and R⁴ have different carbon numbers, and is preferably a linear or branched alkyl group having 7 or more and 9 or less carbon atoms.

Examples of the linear alkyl group having 7 or more and 9 or less carbon atoms include n-heptyl group, n-octyl group, and n-nonyl group. Examples of the branched alkyl group having 7 or more and 9 or less carbon atoms as R³ and R⁴ include 2-ethylhexyl group, isoheptyl group, isooctyl group, and an isononyl group.

Among them, R³ and R⁴ are preferably groups selected from linear or branched alkyl groups having 7 or 9 carbon atoms, and more preferably groups selected from n-heptyl group and n-nonyl group from the viewpoint that the halogen-based resin composition exhibits excellent heat resistance.

Preferred examples of the isosorbide diester (b1) include isosorbide (octanoic acid/decanoic acid) diesters.

The plasticizer B contain one kind or two or more kinds of the isosorbide diesters (b1) represented by the general formula (II). Preferably, the isosorbide diester (b1) represented by the general formula (II) contained in the plasticizer B is one kind.

The plasticizer B may further contain an isosorbide diester (b2) represented by the general formula (III). The isosorbide diester (b2) represented by the general formula (III) can have all stereoisomers, and preferably has a steric structure derived from D-sorbitol from the viewpoint of cost.

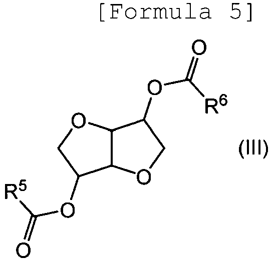

In the general formula (III), R⁵ and R⁶ are each a linear or branched alkyl group having the same carbon number, preferably a linear or branched alkyl group having 7 or more and 9 or less carbon atoms, more preferably a linear or branched alkyl group having the same 7 or more and 9 or less.

Examples of the linear alkyl group as R⁵ and R⁶ include the same groups as R³ and R⁴, and a group selected from linear or branched alkyl groups having 7 or more and 9 or less carbon atoms is preferable.

The plasticizer B contain one kind or two or more kinds of the isosorbide diesters (b2) represented by the general formula (III). The number of the isosorbide diesters (b2) represented by the general formula (III) contained in the plasticizer B is preferably one kind or two kinds, and the number of the isosorbide diesters (b2) represented by the general formula (III) contained in the plasticizer B is more preferably two kinds.

The plasticizer B preferably contains an isosorbide diester (b1) represented by the general formula (II) and an isosorbide diester (b2) represented by the general formula (III), and is preferably composed of an isosorbide diester (b1) represented by the general formula (II) and an isosorbide diester (b2) represented by the general formula (III).

The content of the isosorbide diester (b1) in the plasticizer B is preferably 10 mass% or more, more preferably 13 mass% or more, still more preferably 15 mass% or more, and preferably 100 mass% or less, more preferably 80 mass% or less, still more preferably 60 mass% or less from the viewpoint that the halogen-based resin composition exhibits excellent heat resistance. And the content of the isosorbide diester (b1) in the plasticizer B is preferably 10 mass% or more and 100 mass% or less, more preferably 13 mass% or more and 80 mass% or less, still more preferably 15 mass% or more and 60 mass% or less.

The content of the isosorbide diester (b1) in the plasticizer B can be measured by gas chromatography or the like. Specifically, the content is measured by the method described in Examples.

### (Method for producing plasticizer B)

The plasticizer B is obtained by esterifying isosorbide and two kinds of linear or branched aliphatic carboxylic acids having different carbon numbers.

Examples of the carboxylic acid raw material include linear aliphatic carboxylic acids having 8 or more and 10 or less carbon atoms, such as octanoic acid, nonanoic acid, and decanoic acid; and branched aliphatic carboxylic acids having 8 or more and 10 or less carbon atoms, such as 2-ethylhexanoic acid, isooctanoic acid, isononanoic acid, and isodecanoic acid. Among them, the carboxylic acid raw material is preferably a linear aliphatic carboxylic acid having 8 or more and 10 or less carbon atoms, and more preferably octanoic acid and decanoic acid.

The carboxylic acid raw material to be used preferably has the moisture content reduced as much as possible. When a large amount of moisture is contained in the carboxylic acid raw material, catalyst poisoning to be described later occurs, and the catalytic ability may deteriorate.

When the plasticizer B is composed of the isosorbide diester (b1) represented by the general formula (II), one kind of linear or branched aliphatic carboxylic acid having 8 or more and 10 or less carbon atoms is added in an amount of 1.0 times mole or more and 1.1 times mole or less based on 1 mole of isosorbide in which one of two hydroxyl groups of isosorbide is protected by a protective group, thereby producing an isosorbide monoester in which one hydroxyl group is protected. Then, a linear or branched aliphatic carboxylic acid having 8 or more and 10 or less carbon atoms different from the above carboxylic acid is added in an amount of 1.0 times mole or more and 1.1 times mole or less to isosorbide monoester isolated after deprotection to perform an esterification reaction, whereby the isosorbide diester (b1) represented by the general formula (II) can be obtained. Examples of the protective group include those usually used as a protective group for a hydroxyl group.

As the esterification reaction catalyst, an esterification catalyst exemplified in the method for producing plasticizer A can be used, organotitanium compounds are preferable, one or more selected from titanium tetraisopropoxide, titanium tetra-n-butoxide, and titanium tetra-2-ethylhexyl oxide are preferable.

The amount of the catalyst used varies depending on the kind thereof, but is preferably 0.01 parts by mass or more, more preferably 0.02 parts by mass or more, and still more preferably 0.03 parts by mass or more based on 100 parts by mass of the total amount of the isosorbide and carboxylic acid raw material supplied to the reactor from the viewpoint of sufficiently exerting the catalytic ability. The amount of the catalyst used is preferably 2 parts by mass or less, more preferably 1 part by mass or less, and still more preferably 0.1 parts by mass or less from the viewpoint of catalyst addition efficiency. The amount of the catalyst used is preferably 0.01 parts by mass or more and 2 parts by mass or less, more preferably 0.02 parts by mass or more and 1 part by mass or less, and still more preferably 0.03 parts by mass or more and 0.1 parts by mass or less based on 100 parts by mass of the total amount of the isosorbide and carboxylic acid raw material.

The esterification reaction can be performed using a known reactor.

The reaction temperature is preferably 100°C or higher, more preferably 130°C or higher, and still more preferably 150°C or higher from the viewpoint of reactivity, and is preferably 280°C or lower, more preferably 260°C or lower, and still more preferably 240°C or lower. The reaction temperature is preferably 100°C or higher and 280°C or lower, more preferably 130°C or higher and 260°C or lower, and still more preferably 150°C or higher and 240°C or lower. When the reaction temperature is 100°C or higher, the reaction proceeds quickly, and when the reaction temperature is 280°C or lower, generation of a reaction by-product can be suppressed.

The reaction pressure is usually 13.3 kPa or more in absolute pressure, and is preferably normal pressure or less. Specifically, it is preferable to adjust the pressure to a pressure at which by-produced water can be removed to the outside of the system.

The reaction time varies depending on isosorbide and carboxylic acid raw material, the reaction temperature, the amount of the catalyst used, and the like, but is preferably 1 hour or more, and more preferably 2 hours or more from the viewpoint of reactivity. When the reaction time is sufficient, the load in the separation step of the unreacted phthalic acid raw material and the phthalic acid monoester as a reaction intermediate is reduced. Meanwhile, the reaction time is preferably 24 hours or less, and more preferably 10 hours or less from the viewpoint of yield. When the reaction time is short, generation of by-products can be suppressed, and the quality of the plasticizer B can be improved.

In the esterification reaction, under the above reaction conditions, the generated water is removed from the reaction system to improve the reaction rate to nearly 100%. The excessive carboxylic acid raw material is separated, and then post-treatment is performed by a known method such as alkali washing, water washing, adsorption of impurities, distillation, or the like, whereby the plasticizer B can be obtained as the isosorbide diester (b1) represented by the general formula (II).

When the plasticizer B contains the isosorbide diester (b1) represented by the general formula (II) and the isosorbide diester (b2) represented by the general formula (III), carboxylic acid raw materials containing two kinds of linear or branched aliphatic carboxylic acids having 8 or more and 10 or less carbon atoms can be used. At this time, the esterification catalyst, the reaction conditions, and the like to be used can be the same as those in the esterification reaction.

When the plasticizer B contains the isosorbide diester (b1) represented by the general formula (II) and the isosorbide diester (b2) represented by the general formula (III), the amount of the carboxylic acid raw material charged at the time of starting the esterification reaction is preferably more than the stoichiometric amount. The stoichiometric amount of the carboxylic acid raw material in the esterification reaction is a theoretical ratio at which the isosorbide diester is generated, and is twice the molar amount of the isosorbide to be used. That is, the amount of the carboxylic acid raw material charged is preferably 2.0 times mole or more, more preferably 2.1 times mole or more, still more preferably 2.2 times mole or more, and still more preferably 2.3 times mole or more, and preferably 3.0 times mole or less, more preferably 2.7 times mole or less, and still more preferably 2.5 times mole or less based on 1 mole of isosorbide from the viewpoint of accelerating the reaction and completing the reaction. The amount of the carboxylic acid raw material charged is preferably 2.0 times mole or more and 3.0 times mole or less, more preferably 2.1 times mole or more and 2.7 times mole or less, still more preferably 2.2 times mole or more and 2.5 times mole or less, and still more preferably 2.3 times mole or more and 2.5 times mole or less based on 1 mole of isosorbide.

The molar ratio of the linear or branched aliphatic carboxylic acid having 8 carbon atoms to the linear or branched aliphatic carboxylic acid having 10 carbon atoms in the carboxylic acid raw material (carboxylic acid having 8 carbon atoms/carboxylic acid having 10 carbon atoms) is preferably 5/95 or more, more preferably 8/92 or more, still more preferably 10/90 or more, and preferably 92/8 or less, more preferably 90/10 or less, still more preferably 85/15 or less from the viewpoint that the halogen-based resin composition exhibits excellent heat resistance and the viewpoint of reducing the production cost. The molar ratio (carboxylic acid having 8 carbon atoms/carboxylic acid having 10 carbon atoms) is preferably 5/95 or more and 92/8 or less, more preferably 8/92 or more and 90/10 or less, and still more preferably 10/90 or more and 85/15 or less from the viewpoint that the halogen-based resin composition exhibits excellent heat resistance and from the viewpoint of reducing the production cost.

Since there is almost no difference in the reaction rate between the linear or branched aliphatic carboxylic acid having 8 to 10 carbon atoms and the isosorbide, the molar contents of the isosorbide diester (b1) and the isosorbide diester (b2) in the plasticizer B obtained by the esterification reaction can be estimated from the contents (mol%) of the linear or branched aliphatic carboxylic acids having 8 to 10 carbon atoms in the carboxylic acid raw material. For example, when the carboxylic acid raw material contains a linear aliphatic carboxylic acid having 8 carbon atoms (hereinafter, also referred to as "C8 carboxylic acid") and a linear aliphatic carboxylic acid having 10 carbon atoms (hereinafter, also referred to as "C10 carboxylic acid"), and the content of the linear aliphatic carboxylic acid having 8 carbon atoms in the carboxylic acid raw material is α mol% and the content of the linear aliphatic carboxylic acid having 10 carbon atoms is (100-α) mol%, it can be estimated that the content of the isosorbide C8 carboxylic acid C10 carboxylic acid diester (b1-1) in the plasticizer B obtained by the esterification reaction is 2×[(α/100)×(1-α/100)]×100 mol%, and the content of the isosorbide C8 carboxylic acid diester (b2-1) is (α/100)² × 100 mol%, the content of the isosorbide C10 carboxylic acid diester (b2-2) is [(1-α/100)²]×100 mol%.

In addition, since the molecular weight of the b1-1 is 426.59, the molecular weight of the b2-1 is 398.54, and the molecular weight of the b2-2 is 454.65, the contents (mass%) of these components can be calculated from the contents (mol%) of the isosorbide diester (b1) and the isosorbide diester (b2) in the plasticizer B.

### [Other components]

The plasticizer composition of the present invention may contain a compound that is usually used as a plasticizer for a halogen-based resin.

Examples of the plasticizer include phthalic acid ester-based plasticizers of alcohols having 1 to 7 carbon atoms, such as dimethyl phthalate, diethyl phthalate and dibutyl phthalate; trimellitic acid ester-based plasticizers of alcohols having 6 to 10 carbon atoms, such as tris(2-ethylhexyl) trimellitate, trioctyl trimellitate, and tridecyl trimellitate; adipic acid ester-based plasticizers, azelaic acid ester-based plasticizers, sebacic acid ester-based plasticizers, phosphoric acid ester-based plasticizers, polyester-based plasticizers, epoxy-based plasticizers, fatty acid ester-based plasticizers, and pyromellitic acid ester-based plasticizers from the viewpoint of high compatibility with halogen-based resins.

The total content of the plasticizer A and the plasticizer B in the plasticizer composition of the present invention is preferably 80 mass% or more, more preferably 90 mass% or more, still more preferably 95 mass% or more, and preferably 100 mass% or less, more preferably 100 mass% from the viewpoint that the halogen-based resin composition exhibits excellent heat resistance. The total content of the plasticizer A and the plasticizer B in the plasticizer composition of the present invention is preferably 80 mass% or more and 100 mass% or less, more preferably 90 mass% or more and 100 mass% or less, still more preferably 95 mass% or more and 100 mass% or less, and still more preferably 100 mass%.

The mass ratio of the plasticizer A to the plasticizer B in the plasticizer composition (plasticizer A/plasticizer B) is preferably 5/95 or more, more preferably 10/90 or more, still more preferably 15/85 or more, and is preferably 85/15 or less, more preferably 80/20 or less, still more preferably 75/25 or less from the viewpoint that the halogen-based resin composition exhibits excellent heat resistance. The mass ratio (plasticizer A/plasticizer B) is preferably 5/95 or more and 85/15 or less, more preferably 10/90 or more and 80/20 or less, and still more preferably 15/85 or more and 75/25 or less.

### (Method for producing plasticizer composition)

The plasticizer composition of the present invention is obtained by mixing a plasticizer A composed of a phthalic acid diester represented by the general formula (I), a plasticizer B containing an isosorbide diester (b1) represented by the general formula (II), and as necessary, the other components. The plasticizer A and the plasticizer B may be mixed by adding the plasticizer B to the plasticizer A, or may be mixed by adding the plasticizer A to the plasticizer B. When the plasticizer composition contains the other components, the other components may be added to and mixed with a mixture of the plasticizer A and the plasticizer B, or the respective components may be sequentially mixed with the mixture.

The plasticizer composition can be obtained by mixing the plasticizer A, the plasticizer B, and as necessary, the other components with a stirrer such as a hand mixer, a laboratory mixer, a mortar mixer, a Henschel mixer, a Banbury mixer, or a ribbon blender.

### [Halogen-based resin composition]

The halogen-based resin composition of the present invention contains the plasticizer composition and a halogen-based resin.

### [Halogen-based resin]

In the present invention, the halogen-based resin means a homopolymer or copolymer of a halogen-containing monomer, or a polymer modified with halogen. Examples of the halogen-based resin include vinyl chloride-based resins such as a vinyl chloride resin, an ethylene-vinyl chloride copolymer, a vinyl acetate-vinyl chloride copolymer, and a polyurethane grafted polyvinyl chloride copolymer, a vinylidene chloride resin, chlorinated polyethylene, chlorinated polypropylene, chlorosulfonated polyethylene, and chloroprene rubber from the viewpoint of easy availability. Examples of the halogen-based resin include vinyl chloride-based resins, vinylidene chloride, and chloroprene rubber from the viewpoint of flexibility and the like. The halogen-based resin composition of the present invention preferably contains one or more selected from vinyl chloride resin, vinylidene chloride resin, and chloroprene rubber.

### (Vinyl chloride-based resin)

Examples of the vinyl chloride-based resin include a vinyl chloride homopolymer (vinyl chloride resin) as well as a copolymer of vinyl chloride with a monomer copolymerizable with vinyl chloride (hereinafter, also referred to as "vinyl chloride copolymer"), and a graft copolymer obtained by graft-copolymerizing vinyl chloride to a polymer other than the vinyl chloride copolymer.

The monomer copolymerizable with vinyl chloride may be any monomer having a reactive double bond in the molecule from the viewpoint of easy copolymerization. Examples of the monomer include α-olefins such as ethylene, propylene, and butylene; vinyl esters such as vinyl acetate and vinyl propionate; vinyl ethers such as butyl vinyl ether and cetyl vinyl ether; esters of (meth)acrylic acid, such as methyl (meth)acrylate, ethyl (meth)acrylate, and phenyl (meth)acrylate; aromatic vinyls such as styrene and α-methylstyrene; vinyl halides such as vinylidene chloride and vinyl fluoride; and N-substituted maleimides such as N-phenylmaleimide and N-cyclohexylmaleimide.

The polymer other than the vinyl chloride copolymer may be any polymer capable of graft-copolymerizing vinyl chloride from the viewpoint of easy availability. Examples of the polymer include ethylene-vinyl acetate copolymers, ethylene-vinyl acetate-carbon monoxide copolymers, ethylene-ethyl acrylate copolymers, ethylene-ethyl acrylate-carbon monoxide copolymers, ethylene-methyl methacrylate copolymers, ethylene-propylene copolymers, acrylonitrile-butadiene copolymers, and polyurethane.

### [Additives]

The halogen-based resin composition may contain, as necessary, additives such as a basic inorganic filler, a stabilizer, a processing aid, a colorant, an antioxidant, an ultraviolet absorber, an antistatic agent, and a lubricant as long as the effect of the present invention is not impaired.

Examples of the basic inorganic filler include calcium carbonate, talc, calcium silicate, and alumina. One kind of the basic inorganic filler may be used alone, or two or more kinds thereof may be used in mixture. The basic inorganic filler preferably contains calcium carbonate from the viewpoint of economic efficiency.

When the halogen-based resin composition of the present invention contains a basic inorganic filler, the content of the basic inorganic filler is preferably 1 part by mass or more, more preferably 3 parts by mass or more, and still more preferably 5 parts by mass or more, and is preferably 150 parts by mass or less, more preferably 140 parts by mass or less, and still more preferably 130 parts by mass or less based on 100 parts by mass of the halogen-based resin from the viewpoint of reducing the cost of the halogen-based resin composition. When the halogen-based resin composition of the present invention contains a basic inorganic filler, the content of the basic inorganic filler is preferably 1 part by mass or more and 150 parts by mass or less, more preferably 3 parts by mass or more and 140 parts by mass or less, and still more preferably 5 parts by mass or more and 130 parts by mass or less based on 100 parts by mass of the halogen-based resin.

Examples of the stabilizer include metal soap compounds such as lithium stearate, magnesium stearate, magnesium laurate, calcium ricinoleate, calcium stearate, barium laurate, barium ricinoleate, barium stearate, zinc octylate, zinc laurate, zinc ricinoleate, and zinc stearate; organotin compounds such as dimethyltin bis-2-ethylhexylthioglycolate, dibutyltin maleate, dibutyltin bisbutylmaleate, and dibutyltin dilaurate; and antimony mercaptide compounds. The content of the stabilizer is 0.1 to 20 parts by mass based on 100 parts by mass of the halogen-based resin.

Examples of the processing aid include liquid paraffin, polyethylene wax, stearic acid, stearic acid amide, ethylene bis-stearic acid amide, butyl stearate, and calcium stearate. The content of the processing aid is 0.1 to 20 parts by mass based on 100 parts by mass of the halogen-based resin.

Examples of the colorant include carbon black, lead sulfide, white carbon, titanium white, lithopone, red iron oxide, antimony sulfide, chrome yellow, chrome green, cobalt blue, and molybdenum orange. The content of the colorant is 1 to 100 parts by mass based on 100 parts by mass of the halogen-based resin.

Examples of the antioxidant include phenol-based compounds such as 2,6-di-tert-butylphenol, tetrakis[methylene-3-(3,5-tert-butyl-4-hydroxyphenol)propionate]methane, and 2-hydroxy-4-methoxybenzophenone; sulfur-based compounds such as alkyl disulfide, thiodipropionic acid ester, and benzothiazole; phosphate-based compounds such as trisononylphenyl phosphite, diphenylisodecyl phosphite, triphenyl phosphite, and tris(2,4-di-tert-butylphenyl)phosphite; and organometal-based compounds such as zinc dialkyldithiophosphate and zinc diaryldithiophosphate. The content of the antioxidant is 0.2 to 20 parts by mass based on 100 parts by mass of the halogen-based resin.

Examples of the ultraviolet absorber include salicylate-based compounds such as phenyl salicylate and p-tert-butyl phenyl salicylate; benzophenone-based compounds such as 2-hydroxy-4-n-octoxybenzophenone and 2-hydroxy-4-n-methoxybenzophenone; benzotriazole-based compounds such as 5-methyl-1H-benzotriazole and 1-dioctylaminomethylbenzotriazole; and cyanoacrylate-based compounds. The content of the ultraviolet absorber is 0.1 to 10 parts by mass based on 100 parts by mass of the halogen-based resin.

Examples of the antistatic agent include alkyl sulfonate-type anionic antistatic agents, alkyl ether carboxylic acid-type anionic antistatic agents or dialkyl sulfosuccinate-type anionic antistatic agents; nonionic antistatic agents such as polyethylene glycol derivatives, sorbitan derivatives, and diethanolamine derivatives; quaternary ammonium salts such as alkylamidoamine-type ammonium salts and alkyldimethylbenzyl-type ammonium salts; cationic antistatic agents such as alkylpyridinium-type organic acid salts or hydrochloride; and amphoteric antistatic agents such as alkylbetaine-type amphoteric antistatic agents and alkylimidazoline-type amphoteric antistatic agents. The content of the antistatic agent is 0.1 to 10 parts by mass based on 100 parts by mass of the halogen-based resin.

Examples of the lubricant include silicone, liquid paraffin, paraffin wax, fatty acids such as stearic acid and lauric acid and metal salts thereof, fatty acid amides, fatty acid wax, and higher fatty acid wax. The content of the lubricant is 0.1 to 10 parts by mass based on 100 parts by mass of the halogen-based resin.

### [Method for producing halogen-based resin composition]

The method for producing a halogen-based resin composition of the present invention includes a step of mixing a plasticizer composition, a halogen-based resin, and as necessary, various additives. In the mixing of the plasticizer composition, a plasticizer composition containing the plasticizer A and the plasticizer B may be mixed. Alternatively, the plasticizer A and the plasticizer B may be each separately used and mixed so that the resulting halogen-based resin composition contains a plasticizer composition containing the plasticizer A and the plasticizer B. When the halogen-based resin composition contains various additives, the plasticizer, the halogen-based resin, and the various additives may be mixed at once, or respective components may be sequentially mixed.

The halogen-based resin composition can be made into a mixed powder of the halogen-based resin composition by mixing a plasticizer, a halogen-based resin, and, as necessary, various additives with a stirrer such as a mortar mixer, a laboratory mixer, a Henschel mixer, a Banbury mixer, or a ribbon blender. Furthermore, a mixed powder, a pellet-shaped, or a paste-like halogen-based resin composition can be obtained by melt-forming the halogen-based resin composition with a kneader such as a conical twin screw extruder, a parallel twin screw extruder, a single screw extruder, a co-kneader type kneader, or a roll kneader.

The mixing and melt forming conditions may be conditions used in a normal method for producing a halogen-based resin composition.

The mixed powder or pellets of the halogen-based resin composition can be formed into a desired shape by a known method such as extrusion molding, injection molding, calender forming, press forming, or blow molding. The paste-like halogen-based resin composition can be formed into a desired shape by a known method such as spread forming, dipping forming, gravure forming, or screen processing.

The halogen-based resin composition of the present invention is useful as vehicle interior decorative agents such as instrument panel skins, leather sheets, and wire harnesses; housing interior items such as adhesives, sealants, paints, plastisol, foams, synthetic leather, pipes such as water pipes, building materials, wallpaper materials, floor materials, floor covering materials, heat insulation materials, and roof film materials; packaging materials such as food packaging films; agricultural materials such as agricultural films; automobile related materials such as sealing materials and undercoat materials; base protecting materials, fabric covering materials, wire covering materials, various leathers, various foamed products, general hoses, gaskets, packings, boots, toys, food packaging materials, medical supplies such as tubes and blood bags, and the like.

The present invention includes the following [1] to (14) aspects.
[1] A plasticizer composition including:
   a plasticizer A composed of a phthalic acid diester represented by a general formula (I); and a plasticizer B containing an isosorbide diester (b1) represented by a general formula (II): 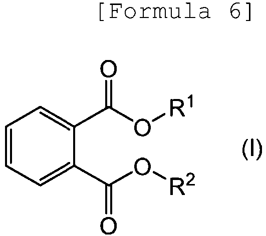
   in the general formula (I), R¹ and R² are each a linear or branched alkyl group having 8 or more and 14 or less carbon atoms, and be the same or different, 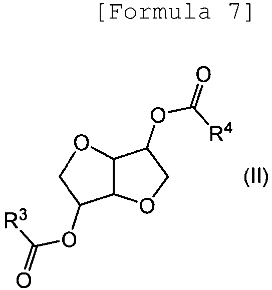
   in the general formula (II), R³ and R⁴ are each a linear or branched alkyl group having different carbon numbers.
(2) The plasticizer composition described in [1],
   wherein in the isosorbide diester (b1) represented by the general formula (II), R³ and R⁴ are each a linear or branched alkyl group having 7 or more and 9 or less carbon atoms.
(3) The plasticizer composition described in [1] or [2], wherein the isosorbide diester (b1) represented by the general formula (II) is an isosorbide (octanoic acid/decanoic acid) diester.
[4] The plasticizer composition described in any one of (1) to [3], wherein
   the plasticizer B further contains an isosorbide diester (b2) represented by a general formula (III), and
   a content of the isosorbide diester (b1) in the plasticizer B is 10 mass% or more: 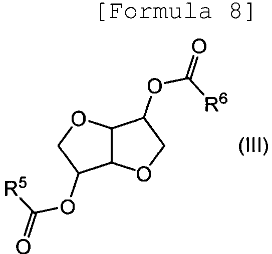
   in the general formula (III), R⁵ and R⁶ are each a linear or branched alkyl group having the same carbon number.
(5) The plasticizer composition described in [4],
   wherein in the isosorbide diester (b2) represented by the general formula (III), R⁵ and R⁶ each represent a linear or branched alkyl group having 7 or more and 9 or less carbon atoms.
[6] The plasticizer composition described in any one of (1) to [5], wherein a mass ratio of the plasticizer A to the plasticizer B (plasticizer A/plasticizer B) is 5/95 or more and 85/15 or less.
(7) A halogen-based resin composition comprising the plasticizer composition described in any one of [1] to [6].
[8] A method for producing a plasticizer composition, comprising mixing a phthalic acid diester represented by a general formula (I); and a plasticizer B containing an isosorbide diester (b1) represented by a general formula (II): 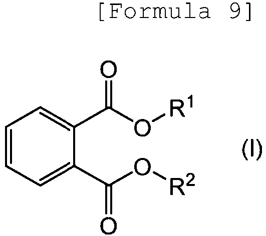 in the general formula (I), R¹ and R² are each a linear or branched alkyl group having 8 or more and 14 or less carbon atoms, and be the same or different, 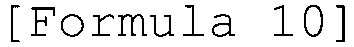 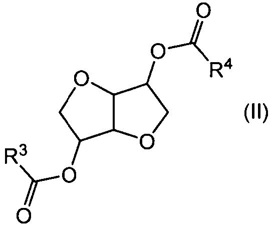 in the general formula (II), R³ and R⁴ are each a linear or branched alkyl group having different carbon numbers.
(9) The method for producing a plasticizer composition described in [8], comprising esterifying isosorbide and a carboxylic acid raw material containing at least two linear or branched aliphatic carboxylic acids having different carbon numbers to obtain the plasticizer B.
[10] The method for producing a plasticizer composition described in [9], wherein the linear or branched aliphatic carboxylic acids having different carbon numbers are linear or branched aliphatic carboxylic acids having 8 or more and 10 or less carbon atoms.
(11) The method for producing a plasticizer composition described in [10], wherein the linear or branched aliphatic carboxylic acids having 8 or more and 10 or less carbon atoms are octanoic acid and decanoic acid.
(12) The method for producing a plasticizer composition described in (10) or [11], wherein a molar ratio of a linear or branched aliphatic carboxylic acid having 8 carbon atoms to a linear or branched aliphatic carboxylic acid having 10 carbon atoms in the carboxylic acid raw material (carboxylic acid having 8 carbon atoms/carboxylic acid having 10 carbon atoms) is 5/95 or more and 92/8 or less.
(13) The method for producing a plasticizer composition described in any one of [8] to [12], comprising esterifying a phthalic acid raw material and an alcohol raw material containing a linear or branched aliphatic alcohol having 8 or more and 14 or less carbon atoms to obtain the plasticizer A.
(14) The method for producing a plasticizer composition described in [13], wherein a molar ratio of a linear aliphatic alcohol to a branched aliphatic alcohol in the alcohol raw material (linear aliphatic alcohol/branched aliphatic alcohol) is 70/30 or more and 100/0 or less.

### Examples

In the following production examples, examples, and comparative examples, "parts" and "%" are "parts by mass" and "mass%", respectively, unless otherwise specified.

### [Production of plasticizer]

### (Production of plasticizer A)

### Production Example 1 (Production of plasticizer A1)

A 1L four-necked flask was charged with 148.1 g (1.00 mol) of phthalic anhydride (manufactured by KANTO CHEMICAL CO., INC.), 317.8 g (2.00 mol) of n-decanol (trade name: KALCOL 1098, manufactured by Kao Corporation), 79.4 g (0.43 mol) of n-dodecanol (trade name: KALCOL 2098, manufactured by Kao Corporation), and 0.14 g of titanium tetraisopropoxide (manufactured by FUJIFILM Wako Pure Chemical Corporation), and the contents of the flask were mixed and heated, and kept at 230°C for 2.5 hours under atmospheric pressure to perform a reaction while distilling off water.

After completion of the reaction, the resulting reaction mixture was cooled to 90°C, 11.0 g of distilled water was added thereto, and the mixture was stirred at 90°C for 1 hour. Thereafter, the resulting mixture was heated to 215°C, and the excess alcohol was distilled off under a reduced pressure condition of about 270 Pa (absolute pressure). Then, the pressure was returned to normal pressure, and the mixture was cooled to 90°C and subjected to suction filtration using filter paper spread with a filtration aid, thereby obtaining a plasticizer A1 as a phthalic acid diester mixture.

Using a 10% solution in which the plasticizer A1 was dissolved in n-hexane, the content of the phthalic acid diester (hereinafter, also referred to as "different alkyl phthalic acid diester") having different alcohol residues in the phthalic acid diester was quantitatively determined from the ratio of the areas of peaks in a chromatogram obtained by the following gas chromatography. In the quantitative determination, the ratio of the area of the peak derived from n-decyl phthalate/the area of the peak derived from n-dodecyl phthalate to the total area of the peaks derived from phthalic acid diester excluding peaks derived from n-hexane and unreacted substances detected in a short time was determined, and the content of the different alkyl phthalic acid diester in the plasticizer A1 was shown in Table 1.

Since the relative sensitivities of the respective components in the phthalic acid diester mixture in the following gas chromatography are substantially the same, the ratio of the areas of peaks in the obtained chromatogram can be regarded as being substantially the same as the mass ratio of the respective components in the phthalic acid diester mixture.

Measurement conditions for the gas chromatography are shown below.
· Measuring apparatus: Agilent 8890 (gas chromatograph, manufactured by Agilent Technologies)
· Column: DB-1ht (manufactured by Agilent Technologies)
   (length: 30 m, inner diameter: 0.25 mm, film thickness: 0.10 µm)
· Carrier gas: He (constant flow mode)
· Split ratio: 50 : 1
· Detector: FID
· Inlet temperature: 330°C
· Detector temperature: 330°C
· Measurement temperature conditions: 100°C → temperature rise at 10°C/min → maintained at 350°C for 10 minutes
· Detection sensitivity: sampling rate, 20 Hz
· Minimum peak width, 0.01 min
· Amount injected: 1 µl (split method)
· Quantitative determination of heterologous alkyl diesters

### Production Example 2 (Production of plasticizer A2)

A plasticizer A2 was obtained in the same manner as in Production Example 1 except that 155.5 g (1.05 mol) of phthalic anhydride was used, and n-decanol and n-dodecanol were changed to 336.2 g (2.12 mol) of n-decanol and 64.3 g (0.32 mol) of isotridecanol (trade name: TRIDECANOL, KH Neochem Co., Ltd.).

When the contents of n-decyl phthalate/isotridecyl phthalate in the plasticizer A2 were measured in the same manner as in the plasticizer A1, the peaks of chromatograms overlapped, and the contents could not be measured.

### Production Example 3 (Production of plasticizer A3)

A plasticizer A3 was obtained in the same manner as in Production Example 1 except that n-decanol and n-dodecanol were changed to 208.0 g (1.31 mol) of n-decanol and 208.0 g (1.12 mol) of n-dodecanol.

The contents of n-decyl phthalate/n- dodecyl phthalate in the plasticizer A3 were measured in the same manner as in the plasticizer A1. Result is shown in Table 1.

**[Table 1]**

| Production Examples | | Production Example 1 | | Production Example 2 | | Production Example 3 | |
|---|---|---|---|---|---|---|---|
| Plasticizer | | A1 | | A2 | | A3 | |
| | | Mass (g) | mol | Mass (g) | mol | Mass (g) | mol |
| Phthalic anhydride | | 148.1 | 1.00 | 155.5 | 1.05 | 148.4 | 1.00 |
| | n-decanol | 317.8 | 2.00 | 336.2 | 2.12 | 208.0 | 1.31 |
| | n-dodecanol | 79.4 | 0.43 | - | - | 208.0 | 1.12 |
| | i-tridecanol | - | - | 64.3 | 0.32 | - | - |
| Linear/branched *1 | | 100/0 | | 87/13 | | 100/0 | |
| Content of different alkyl diester (%) *2 | | 31.1 | | ND | | 50.1 | |

| | | | | | | | |
|---|---|---|---|---|---|---|---|
| *1: The molar ratio of the linear aliphatic alcohol to the branched aliphatic alcohol in the alcohol raw material (linear aliphatic alcohol/branched aliphatic alcohol) is shown. *2: The content (%) of the phthalic acid diester having different alcohol residues in the plasticizer calculated from the peak area by gas chromatography is shown. | | | | | | | |

### (Production of plasticizer B)

### Production Example 4 (Production of plasticizer B1)

A 1L four-necked flask was charged with 155.0 g (1.06 mol) of isosorbide (manufactured by Tokyo Chemical Industry Co., Ltd.), 201.4 g (1.40 mol) of octanoic acid (trade name: LUNAC 8-98, manufactured by Kao Corporation), 201.4 g (1.17 mol) of decanoic acid (trade name: LUNAC 10-98, manufactured by Kao Corporation), and 0.28 g of titanium tetraisopropoxide (manufactured by FUJIFILM Wako Pure Chemical Corporation), and the contents of the flask were mixed and heated, and kept at 230°C for 5.5 hours under atmospheric pressure to perform a reaction while distilling off water.

After completion of the reaction, the resulting reaction mixture was cooled to 90°C, 11.6 g of distilled water was added thereto, and the mixture was stirred at 90°C for 1 hour. Thereafter, the resulting mixture was heated to 245°C, and the excess fatty acid was distilled off under a reduced pressure condition of about 400 Pa (absolute pressure). Then, the pressure was returned to normal pressure, and the mixture was cooled to 90°C and subjected to suction filtration using filter paper spread with a filtration aid, thereby obtaining a plasticizer B1 as an isosorbide diester mixture.

The theoretical value of the content of the isosorbide (octanoic acid/decanoic acid) diester, which is the isosorbide diester (b1) in the plasticizer B1 determined from the molar concentrations of octanoic acid and decanoic acid with respect to the total of octanoic acid and decanoic acid used was 49.9 mass%, and the actually measured value of the content of the isosorbide (octanoic acid/decanoic acid) diester in the plasticizer B1 by gas chromatography was 50.4%. The measurement by gas chromatography was performed under the same conditions as those of the plasticizer A1.

### Production Example 5 (Production of plasticizer B2)

A plasticizer B2 was obtained in the same manner as in Production Example 4 except that octanoic acid and decanoic acid were changed to 43.1 g (0.30 mol) of octanoic acid and 388.6 g (2.26 mol) of decanoic acid.

The theoretical value of the content of the isosorbide (octanoic acid/decanoic acid) diester, which is the isosorbide diester (b1), in the plasticizer B2 determined from the respective molar concentrations with respect to the total of octanoic acid and decanoic acid used was 19.7 mass%, and the actually measured value of the content of the isosorbide (octanoic acid/decanoic acid) diester in the plasticizer B2 by gas chromatography was 18.5%. The measurement by gas chromatography was performed under the same conditions as those of the plasticizer A1.

### Production Example 6 (Production of plasticizer B3)

A plasticizer B3 was obtained in the same manner as in Production Example 4 except that 115.2 g (0.79 mol) of isosorbide was used, and octanoic acid and decanoic acid were changed to 227.1 g (1.57 mol) of octanoic acid and 56.8 g (0.33 mol) of decanoic acid.

The theoretical value of the content of the isosorbide (octanoic acid/decanoic acid) diester, which is the isosorbide diester (b1), in the plasticizer B3 determined from the respective molar concentrations with respect to the total of octanoic acid and decanoic acid used was 29.9 mass%, and the actually measured value of the content of the isosorbide (octanoic acid/decanoic acid) diester in the plasticizer B3 by gas chromatography was 31.7%. The measurement by gas chromatography was performed under the same conditions as those of the plasticizer A1.

### Comparative Production Example 1 (Production of plasticizer B11)

A plasticizer B11 was obtained in the same manner as in Production Example 4 except that 116.0 g (0.79 mol) of isosorbide was used, and octanoic acid and decanoic acid were changed to 274.6 g (1.90 mol) of octanoic acid.

### Comparative Production Example 2 (Production of plasticizer B12)

A plasticizer B12 was obtained in the same manner as in Production Example 4 except that 181.0 g (1.24 mol) of isosorbide was used, and octanoic acid and decanoic acid were changed to 509.3 g (2.96 mol) of decanoic acid.

**[Table 2]**

| Production Examples | | Production Example 4 | | Production Example 5 | | Production Example 6 | | Comparative Production Example 1 | | Comparative Production Example 2 | |
|---|---|---|---|---|---|---|---|---|---|---|---|
| Plasticizer | | B1 | | B2 | | B3 | | B11 | | B12 | |
| | | Mass (g) | mol | Mass (g) | mol | Mass (g) | mol | Mass | mol | Mass | mol |
| Isosorbide | | 155.0 | 1.06 | 155.1 | 1.06 | 115.2 | 0.79 | 116.0 | 0.79 | 181.4 | 1.24 |
| Carboxylic acid raw material | Octanoic acid | 201.4 | 1.40 | 43.1 | 0.30 | 227.1 | 1.57 | 274.6 | 1.90 | - | - |
| | Decanoic acid | 201.4 | 1.17 | 388.6 | 2.26 | 56.8 | 0.33 | - | - | 509.3 | 2.96 |
| C8/010 *1 | | 54/46 | | 12/88 | | 83/17 | | 100/0 | | 0/100 | |
| b1 Content (%) *2 | | 50.4 | | 18.5 | | 31.7 | | 0 | | 0 | |

| | | | | | | | | | | | |
|---|---|---|---|---|---|---|---|---|---|---|---|
| *1: The molar ratio of octanoic acid to decanoic acid in the carboxylic acid raw material (octanoic acid/decanoic acid) is shown. *2: The content (%) of the isosorbide diester (b1) in the plasticizer B calculated from the peak area by gas chromatography is shown. | | | | | | | | | | | |

### [Production of plasticizer composition]

### Example 1 (Production of plasticizer composition 1)

Fifty point zero grams of the plasticizer A1 and 50.0 g of the plasticizer B1 were weighed, and these were mixed until they became visually uniform, thereby obtaining a plasticizer composition 1.

### Examples 2 to 8 and Comparative Examples 1 to 7 (Production of plasticizer compositions 2 to 8 and 11 to 17)

Plasticizer compositions 2 to 8 and 11 to 17 were obtained in the same manner as in Example 1 except that the kind and blending ratio of the plasticizer A and the plasticizer B were changed as shown in Table 3.

In Table 3, didecyl phthalate (product name; VINYCIZER 105, manufactured by Kao Corporation) was used as the plasticizer A4, and dihexyl phthalate (product name; dihexyl phthalate, manufactured by Tokyo Chemical Industry Co., Ltd.) was used as the plasticizer A11.

**[Table 3]**

| Examples | 1 | 2 | 3 | 4 | 5 | 6 | 7 | 8 |
|---|---|---|---|---|---|---|---|---|
| Plasticizer composition | 1 | 2 | 3 | 4 | 5 | 6 | 7 | 8 |
| Plasticizer A | A1 | A1 | A1 | A1 | A1 | A2 | A3 | A4 |
| Plasticizer B | B1 | B1 | B1 | B2 | B3 | B1 | B1 | B1 |
| Plasticizer A/ Plasticizer B | 50/50 | 70/30 | 20/80 | 50/50 | 50/50 | 50/50 | 50/50 | 50/50 |

| Comparative Examples | 1 | 2 | 3 | 4 | | 5 | 6 | 7 |
|---|---|---|---|---|---|---|---|---|
| Plasticizer composition | 11 | 12 | 13 | 14 | | 15 | 16 | 17 |
| Plasticizer A | A11 | A1 | A1 | A1 | | A11 | A11 | A11 |
| Plasticizer B | B11 | B12 | B11 | B11/B12 *1 | | B1 | B2 | B3 |
| Plasticizer A/ Plasticizer B | 20/80 | 50/50 | 50/50 | 50/50 | | 50/50 | 50/50 | 50/50 |

| | | | | | | | | |
|---|---|---|---|---|---|---|---|---|
| *1: A mixture of a plasticizer B11 and a plasticizer B12 at a mass ratio of 50:50 was used. | | | | | | | | |

### [Production of halogen-based resin composition]

### Examples 9 to 16 and Comparative Examples 8 to 14 (Production of halogen-based resin compositions 1 to 8 and 11 to 17)

One hundred parts of a vinyl chloride resin (trade name: ZEST1400, manufactured by Shin Dai-ichi Vinyl Corporation, average polymerization degree 1400) were mixed with 80 parts of the plasticizer composition shown in Table 4, 2 parts of a Ca/Mg/Zn-based vinyl chloride resin stabilizer (trade name: ADK STAB RUP-103, ADEKA CORPORATION), and 0.5 parts of a lubricant (trade name: LUNAC S-70V, manufactured by Kao Corporation) at room temperature using a stirring rod. Thereafter, the mixture was kneaded at a rotation speed of 17 rpm and 170°C using a 4-inch open roll kneader (manufactured by Nishimura Machinery Co., Ltd.) to be gelled, and the gelled mixture was continuously kneaded for 5 minutes after the gelling to obtain a halogen-based resin composition.

The respective unformed sheets produced above were preheated at 160°C for 5 minutes, then pressurized at a pressure of 20 MPa for 2 minutes, and further cooled at 15°C for 2 minutes to obtain 0.8 mm-thick formed sheets of halogen-based resin compositions 1 to 8 and 11 to 17.

### [Measurement]

### [Evaluation of heat resistance]

A test piece obtained by punching a formed sheet of each halogen-based resin composition into a No. 3 dumbbell shape prescribed in JIS K 6251:2017 was left standing at 100°C for 100 hours in a gear aging tester (trade name: AG-103, manufactured by Ueshima Seisakusho Co., Ltd.) prescribed in JIS K 7212:1999, and the mass reduction rate (%) of the test piece before and after the standing was measured. The closer the numerical value is to zero, the more excellent the heat resistance is. The results are shown in Table 4.

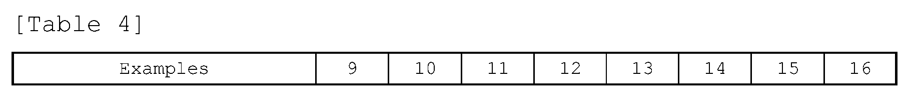

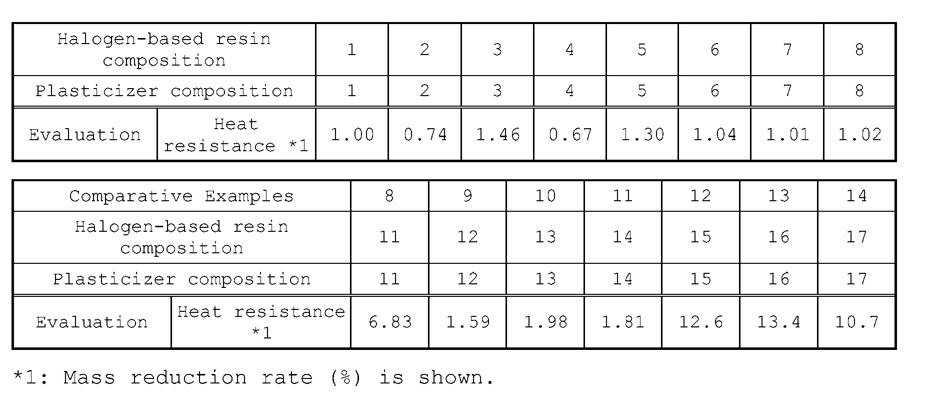

Table 4 shows that the plasticizer composition of the present invention exhibits excellent heat resistance when used in a halogen-based resin composition. The comparison of the results of Example 9 with those of Examples 10 and 11 shows that the heat resistance of the halogen-based resin composition is improved as the content of the plasticizer A in the plasticizer composition increases. The comparison of the results of Example 9 with those of Examples 12 and 13 shows that the heat resistance of the halogen-based resin composition is improved as the contents of the plasticizers b1 and b2 containing a large number of decanoic acid-derived groups in the plasticizer B increase. On the other hand, the comparison of the results of Example 9 with those of Examples 14 to 16 shows that the kind of the plasticizer A had little influence on the heat resistance of the halogen-based resin composition.

On the other hand, the halogen-based resin composition 11 of Comparative Example 8 using the plasticizer composition 11 containing di-n-hexyl phthalate (plasticizer A11) and isosorbide dioctanoate (plasticizer B11) was significantly inferior in heat resistance. In addition, the halogen-based resin composition 12 of Comparative Example 9 using the plasticizer composition 12 containing the plasticizer A1 and isosorbide didecanoate (plasticizer B12), the halogen-based resin composition 13 of Comparative Example 10 using the plasticizer composition 13 containing the plasticizer A1 and isosorbide dioctanoate (plasticizer B11), and the halogen-based resin composition 14 of Comparative Example 11 using the plasticizer composition 14 containing the plasticizer A1, isosorbide dioctanoate (plasticizer B11), and isosorbide didecanoate (plasticizer B12) were all inferior in heat resistance. Furthermore, the halogen-based resin composition 15 of Comparative Example 12 using the plasticizer composition 15 containing di-n-hexyl phthalate (plasticizer A11) and the plasticizer B1, the halogen-based resin composition 16 of Comparative Example 13 using the plasticizer composition 16 containing di-n-hexyl phthalate (plasticizer A11) and the plasticizer B2, and the halogen-based resin composition 17 of Comparative Example 14 using the plasticizer composition 17 containing di-n-hexyl phthalate (plasticizer A11) and the plasticizer B3 are all extremely inferior in heat resistance. From the comparison with the results of Examples 1, 14, and 15, it has been found that the number of carbon atoms in R¹ and R² of the phthalic acid diester represented by the general formula (I) affects the heat resistance of the halogen-based resin composition containing the plasticizer composition of the present invention.

## Claims

1. A plasticizer composition comprising:
a plasticizer A composed of a phthalic acid diester represented by a general formula (I); and a plasticizer B containing an isosorbide diester (b1) represented by a general formula (II): 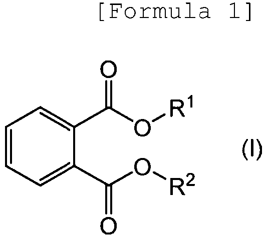
in the general formula (I), R¹ and R² are each a linear or branched alkyl group having 8 or more and 14 or less carbon atoms, and be the same or different, 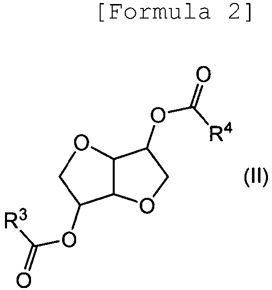
in the general formula (II), R³ and R⁴ are each a linear or branched alkyl group having different carbon numbers.

2. The plasticizer composition according to claim 1, wherein in the isosorbide diester (b1) represented by the general formula (II), R³ and R⁴ are each a linear or branched alkyl group having 7 or more and 9 or less carbon atoms.

3. The plasticizer composition according to claim 1 or 2, wherein the isosorbide diester (b1) represented by the general formula (II) is an isosorbide (octanoic acid/decanoic acid) diester.

4. The plasticizer composition according to any one of claims 1 to 3, wherein
the plasticizer B further contains an isosorbide diester (b2) represented by a general formula (III), and
a content of the isosorbide diester (b1) in the plasticizer B is 10 mass% or more: 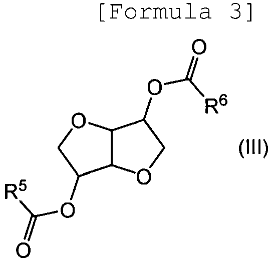
in the general formula (III), R⁵ and R⁶ are each a linear or branched alkyl group having the same carbon number.

5. The plasticizer composition according to claim 4, wherein in the isosorbide diester (b2) represented by the general formula (III), R⁵ and R⁶ each represent a linear or branched alkyl group having 7 or more and 9 or less carbon atoms.

6. The plasticizer composition according to any one of claims 1 to 5, wherein a mass ratio of the plasticizer A to the plasticizer B (plasticizer A/plasticizer B) is 5/95 or more and 85/15 or less.

7. A halogen-based resin composition comprising the plasticizer composition according to any one of claims 1 to 6.

8. A method for producing a plasticizer composition, comprising mixing a phthalic acid diester represented by a general formula (I); and a plasticizer B containing an isosorbide diester (b1) represented by a general formula (II): 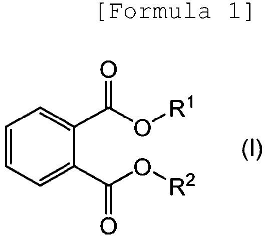
in the general formula (I), R¹ and R² are each a linear or branched alkyl group having 8 or more and 14 or less carbon atoms, and be the same or different, 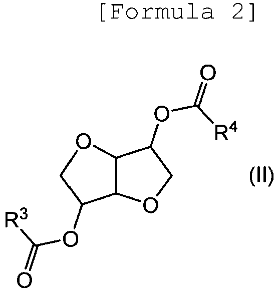
in the general formula (II), R³ and R⁴ are each a linear or branched alkyl group having different carbon numbers.

9. The method for producing a plasticizer composition according to claim 8, comprising esterifying isosorbide and a carboxylic acid raw material containing at least two linear or branched aliphatic carboxylic acids having different carbon numbers to obtain the plasticizer B.

10. The method for producing a plasticizer composition according to claim 9, wherein the linear or branched aliphatic carboxylic acids having different carbon numbers are linear or branched aliphatic carboxylic acids having 8 or more and 10 or less carbon atoms.

11. The method for producing a plasticizer composition according to claim 10, wherein the linear or branched aliphatic carboxylic acids having 8 or more and 10 or less carbon atoms are octanoic acid and decanoic acid.

12. The method for producing a plasticizer composition according to claim 10 or 11, wherein a molar ratio of a linear or branched aliphatic carboxylic acid having 8 carbon atoms to a linear or branched aliphatic carboxylic acid having 10 carbon atoms in the carboxylic acid raw material (carboxylic acid having 8 carbon atoms/carboxylic acid having 10 carbon atoms) is 5/95 or more and 92/8 or less.

13. The method for producing a plasticizer composition according to any one of claims 8 to 12, comprising esterifying a phthalic acid raw material and an alcohol raw material containing a linear or branched aliphatic alcohol having 8 or more and 14 or less carbon atoms to obtain the plasticizer A.

14. The method for producing a plasticizer composition according to claim 13, wherein a molar ratio of a linear aliphatic alcohol to a branched aliphatic alcohol in the alcohol raw material (linear aliphatic alcohol/branched aliphatic alcohol) is 70/30 or more and 100/0 or less.
